# FASCICULE DE BREVET EUROPEEN

(11) **EP 2 507 010 B1**
(45) Date de publication et mention de la délivrance du brevet: **21.10.2015**
(21) Numéro de dépôt: 10784801.2
(22) Date de dépôt: 30.11.2010
(51) Int. Cl.: B23P 15/04, F01D 5/14, F04D 29/32, B23K 9/04

(54) **PROCÉDÉ DE RÉALISATION D'UN RENFORT MÉTALLIQUE D'AUBE DE TURBOMACHINE**
VERFAHREN ZUR HERSTELLUNG EINER METALLVERSTÄRKUNG FÜR EINE TURBOMASCHINENSCHAUFEL
METHOD FOR MAKING A METAL REINFORCEMENT FOR A TURBINE ENGINE BLADE

(30) Priorité: 30.11.2009 FR 0958528
(43) Date de publication de la demande: 10.10.2012
(60) Demande divisionnaire: 14198664.6
(73) Titulaire: Snecma, 75015 Paris (FR)
(72) Inventeur: CATTIEZ, Bernard, José, Michel, F-91000 Evry (FR); FLESCH, Thierry, Jean, Emile, F-77310 Pringy (FR); GUINOIS, Jérôme, F-91100 Corbeil Essonnes (FR); LEVEQUE, Stéphane André, F-91300 Massy (FR); MAROLLE, Philippe, F-91320 Wissous (FR)
(74) Mandataire: Lebkiri, Alexandre
(86) Numéro de dépôt international: PCT/EP2010/068578
(87) Numéro de publication internationale: WO 2011/064406

(56) Documents cités:
- EP-A1- 1 481 756
- EP-A1- 1 574 270
- EP-A1- 1 596 036
- EP-A2- 2 113 634
- FR-A1- 2 319 008
- JP-A- 62 165 506
- US-A- 2 615 236
- US-A- 3 695 778
- US-A- 4 738 594

## Description

La présente invention concerne un procédé de réalisation d'un renfort métallique d'aube composite ou métallique de turbomachine.

Plus particulièrement l'invention concerne un procédé de réalisation d'un renfort métallique de bord d'attaque d'aube de turbomachine.

Le domaine de l'invention est celui des turbomachines et plus particulièrement celui des aubes de soufflante, en matériau composite ou métallique, de turbomachine et dont le bord d'attaque comporte un renfort structurel métallique.

Toutefois, l'invention est également applicable à la réalisation d'un renfort métallique destiné à renforcer un bord de fuite d'aube de turbomachine.

On rappelle que le bord d'attaque correspond à la partie antérieure d'un profil aérodynamique qui fait face au flux d'air et qui divise l'écoulement d'air en un écoulement d'air d'intrados et en un écoulement d'air extrados. Le bord de fuite correspond à la partie postérieure d'un profil aérodynamique où se rejoignent les écoulements intrados et extrados.

Il est connu d'équiper les aubes de soufflante d'une turbomachine, réalisées en matériaux composites, d'un renfort structurel métallique s'étendant sur toute la hauteur de l'aube et au-delà de leur bord d'attaque comme mentionné dans le document EP1908919. Un tel renfort permet de protéger l'aubage composite lors d'un impact d'un corps étranger sur la soufflante, tel que par exemple un oiseau, de la grêle ou encore des cailloux.

En particulier, le renfort structurel métallique protège le bord d'attaque de l'aube composite en évitant des risques de délamination, de rupture de fibre ou encore d'endommagement par décohésion fibre/matrice.

De façon classique, une aube de turbomachine comporte une surface aérodynamique s'étendant, selon une première direction, entre un bord d'attaque et un bord de fuite et, selon une deuxième direction sensiblement perpendiculaire à la première direction, entre un pied et un sommet de l'aube. Le renfort structurel métallique épouse la forme du bord d'attaque de la surface aérodynamique de l'aube et s'étend selon la première direction au-delà du bord d'attaque de la surface aérodynamique de l'aube pour épouser le profil de l'intrados et de l'extrados de l'aube et selon la deuxième direction entre le pied et le sommet de l'aube.

De façon connue, le renfort structurel métallique est une pièce métallique réalisée entièrement par fraisage à partir d'un bloc de matière.

Un autre exemple de réalisation d'un tel renfort structurel métallique est notamment décrit dans le document FR2319008 qui décrit le préambule de la revendication 1.

Cependant, le renfort métallique d'un bord d'attaque d'aube est une pièce complexe à réaliser, nécessitant de nombreuses opérations de reprises et des outillages complexes impliquant des coûts de réalisation importants.

Dans ce contexte, l'invention vise à résoudre les problèmes mentionnés ci-dessus en proposant un procédé de réalisation d'un renfort métallique de bord d'attaque ou de bord de fuite d'aube de turbomachine permettant de réduire significativement les coûts de réalisation d'une telle pièce et de simplifier la gamme de fabrication.

A cette fin, l'invention propose un procédé de réalisation d'un renfort métallique de bord d'attaque ou de bord de fuite d'aube de turbomachine présentant une base, formant le bord d'attaque ou le bord de fuite dudit renfort, prolongée par deux flancs latéraux, ledit procédé comportant une étape de positionnement d'une préforme, formée par une première tôle métallique et par une deuxième tôle métallique, au moyen d'un outillage positionnant ladite préforme dans une position de sorte que ladite préforme présente à une extrémité une zone apte à recevoir du métal d'apport, ledit procédé étant caractérisé en ce qu'il comporte en outre une étape de construction d'une base dudit renfort métallique par rechargement de métal d'apport dans ladite zone, par superposition d'une pluralité de cordons de métal, au moyen d'un appareillage de soudage MIG comportant un générateur de courant pulsé et présentant un débit de fil d'apport pulsé.

Grâce à l'invention, le renfort structurel métallique est réalisé de façon simple et rapide à partir d'une préforme et d'un procédé de reconstruction de matière par soudage MIG (pour « Metal Inert Gaz ») construisant la base du renfort à partir de l'extrémité de la préforme mise en place dans un outillage de maintien et de conformation. Préférentiellement, le procédé MIG utilisé est un perfectionnement appelé CMT (Cold Metal Transfert) qui est décrit dans la demande FR2931714. Ce procédé particulier permet de déposer des volumes de matière importants tout en minimisant la déformation des tôles.

Ce procédé de réalisation permet ainsi de s'affranchir de la réalisation complexe du renfort par fraisage dans la masse à partir de méplats nécessitant de grand volume de matière de mise en oeuvre et par conséquent des coûts importants en approvisionnement de matière première.

Le procédé selon l'invention permet également de diminuer sensiblement les coûts de fabrication d'une telle pièce.

Avantageusement, la préforme est formée par une première tôle métallique et par une deuxième tôle métallique positionnée dans l'outillage de façon à ce qu'elles présentent à leur extrémité une jointure apte à recevoir la matière de soudage.

Le procédé de réalisation d'un renfort métallique d'aube de turbomachine selon l'invention peut également présenter une ou plusieurs des caractéristiques ci-dessous, considérées individuellement ou selon toutes les combinaisons techniquement possibles :
- ladite préforme comporte une première tôle métallique et une deuxième tôle métallique positionnées, au moyen dudit outillage, dans une position non parallèle de sorte qu'elles présentent à leur extrémité une zone apte à recevoir ledit métal d'apport, ladite étape de construction de ladite base dudit renfort solidarisant lesdites tôles métalliques en position ;
- ladite préforme est formée par une tôle métallique préformée à chaud de sorte que ladite préforme comporte des flancs et à une extrémité une zone apte à recevoir ledit métal d'apport. ;
- ladite étape de construction est suivie d'une étape d'usinage de ladite matière rechargée dans ladite zone de soudage de façon à approcher le profil final de ladite base ;
- le procédé comporte une étape de traitement thermique de relaxation des contraintes ;
- le procédé comporte une étape de conformation à chaud ;
- le procédé comporte une étape de finition dudit renfort métallique consistant en la reprise de ladite matière rechargée de façon à affiner le profil final de ladite base et le bord d'attaque ou le bord de fuite dudit renfort métallique et/ou en la reprise des tôles métalliques de façon à former les flancs dudit renfort métallique ;
- le procédé comporte une étape de découpage de ladite première tôle métallique et de ladite deuxième tôle métallique par découpage laser ;
- le procédé comporte une opération consistant à augmenter la rugosité des faces intérieures desdits flancs ;
- le procédé comporte une étape de mise en forme desdites tôles métalliques avant ladite étape de positionnement dans ledit outillage ;
- lors de ladite étape de positionnement, lesdites tôles métalliques sont mises en forme dans ledit outillage et sont maintenues accolées ;
- lors de ladite étape de positionnement, lesdites tôles métalliques sont mises en forme et sont maintenues espacées par un poignard positionné entre lesdits tôles métalliques, le profil externe dudit poignard conformant le profil de l'intrados et de l'extrados desdites tôles métallique ;
- le procédé comporte une étape d'évacuation de la chaleur desdites tôles métalliques en position dans ledit outillage via ledit outillage.

D'autres caractéristiques et avantages de l'invention ressortiront plus clairement de la description qui en est donnée ci-dessous, à titre indicatif et nullement limitatif, en référence aux figures annexées, parmi lesquelles :
- la figure 1 est une vue latérale d'une aube comportant un renfort structurel métallique de bord d'attaque obtenu au moyen du procédé de réalisation selon l'invention ;
- la figure 2 est une vue partielle en coupe de la figure 1 selon un plan de coupe AA ;
- la figure 3 est un schéma synoptique présentant les principales étapes de réalisation d'un renfort structurel métallique de bord d'attaque d'aube de turbomachine du procédé de réalisation selon l'invention ;
- la figure 4 est une vue partielle en coupe du renfort métallique de bord d'attaque d'aube de turbomachine lors d'un premier mode de réalisation de la troisième étape du procédé Illustré en figure 3 ;
- la figure 5 est une vue partielle en coupe du renfort métallique de bord d'attaque d'aube de turbomachine lors d'un second mode de réalisation de la troisième étape du procédé Illustré en figure 3 ;
- la figure 6 est une vue partielle en coupe du renfort métallique de bord d'attaque d'aube de turbomachine lors de la quatrième étape du procédé illustré en figure 3 ;
- la figure 7 est une vue partielle en coupe du renfort métallique de bord d'attaque d'aube de turbomachine lors d'une cinquième étape du procédé illustré en figure 3 ;
- la figure 8 est une vue partielle en coupe du renfort métallique de bord d'attaque d'aube de turbomachine dans son état final obtenu par le procédé de réalisation selon l'invention illustré en figure 3 ;
- la figure 9 illustre une vue éclatée de l'outillage spécifique de maintien utilisé pour la réalisation du renfort métallique de bord d'attaque selon le procédé de réalisation illustré en figure 3 ;
- la figure 10 illustre une vue du renfort métallique de bord d'attaque d'aube de turbomachine dans son état initial lors d'un second mode de réalisation d'une préforme selon le procédé de réalisation illustré en figure 3 ne faisant pas partie des revendications :
- la figure 11 illustre une vue du renfort métallique de bord d'attaque d'aube de turbomachine dans son état final lors d'un second mode de réalisation d'une préforme selon le procédé de réalisation illustré en figure 3 ne faisant pas partie des revendications.

Dans toutes les figures, les éléments communs portent les mêmes numéros de référence sauf précision contraire.

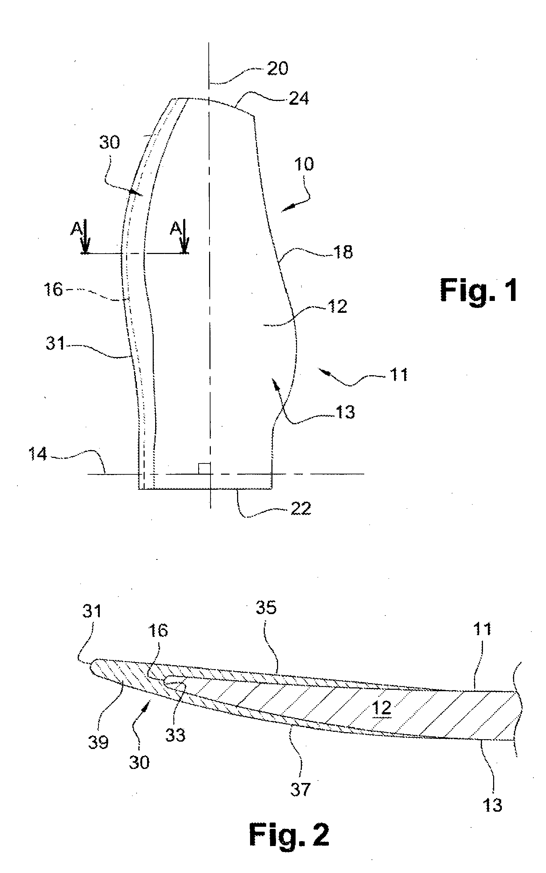

La figure 1 est une vue latérale d'une aube comportant un renfort structurel métallique de bord d'attaque obtenu au moyen du procédé de réalisation selon l'invention,

L'aube 10 illustrée est par exemple une aube mobile de soufflante d'une turbomachine (non représentée).

L'aube 10 comporte une surface aérodynamique 12 s'étendant selon une première direction axiale 14 entre un bord d'attaque 16 et un bord de fuite 18 et selon une deuxième direction radiale 20 sensiblement perpendiculaire à la première direction 14 entre un pied 22 et un sommet 24.

La surface aérodynamique 12 forme la face extrados 13 et intrados 11 de l'aube 10, seul la face extrados 13 de l'aube 10 est représentée sur la figure 1. L'intrados 11 et l'extrados 13 forment les faces latérales de l'aube 10 qui relient le bord d'attaque 16 au bord de fuite 18 de l'aube 10.

Dans ce mode de réalisation, l'aube 10 est une aube composite obtenue typiquement par drapage d'un matériau composite tissé. A titre d'exemple, le matériau composite utilisé peut être composé par un assemblage de fibres de carbone tissées et d'une matrice résineuse, l'ensemble étant formé par moulage au moyen d'un procédé d'injection de résine sous vide de type RTM (pour « Resin Transfer Molding »).

L'aube 10 comporte un renfort structurel métallique 30 collé au niveau de son bord d'attaque 16 et qui s'étend à la fois selon la première direction 14 au-delà du bord d'attaque 16 de la surface aérodynamique 12 de l'aube 10 et selon la deuxième direction 20 entre le pied 22 et le sommet 24 de l'aube.

Comme représenté à la figure 2, le renfort structurel 30 épouse la forme du bord d'attaque 16 de la surface aérodynamique 12 de l'aube 10 qu'il prolonge pour former un bord d'attaque 31, dit bord d'attaque du renfort.

De façon classique, le renfort structurel 30 est une pièce monobloc comportant une section sensiblement en forme de V présentant une base 39 formant le bord d'attaque 31 et prolongée par deux flancs latéraux 35 et 37 épousant respectivement l'intrados 11 et extrados 13 de la surface aérodynamique 12 de l'aube. Les flancs 35, 37 présentent un profil effilé ou amincie en direction du bord de fuite de l'aube.

La base 39 comporte un profil interne 33 arrondi apte à épouser la forme arrondie du bord d'attaque 16 de l'aube 10.

Le renfort structurel 30 est métallique et préférentiellement à base titane. Ce matériau présente en effet une grande capacité d'absorption de l'énergie due aux chocs. Le renfort est collé sur l'aube 10 au moyen de colle connue de l'homme du métier, comme par exemple une colle cyanoacrylique ou encore époxy.

Ce type de renfort structurel métallique 30 utilisé pour le renfort d'aube composite de turbomachine est plus particulièrement décrit notamment dans la demande de brevet EP1908919.

Le procédé selon l'invention permet de réaliser un renfort structurel tel qu'illustré à la figure 2, la figure 2 illustrant le renfort 30 dans son état final.

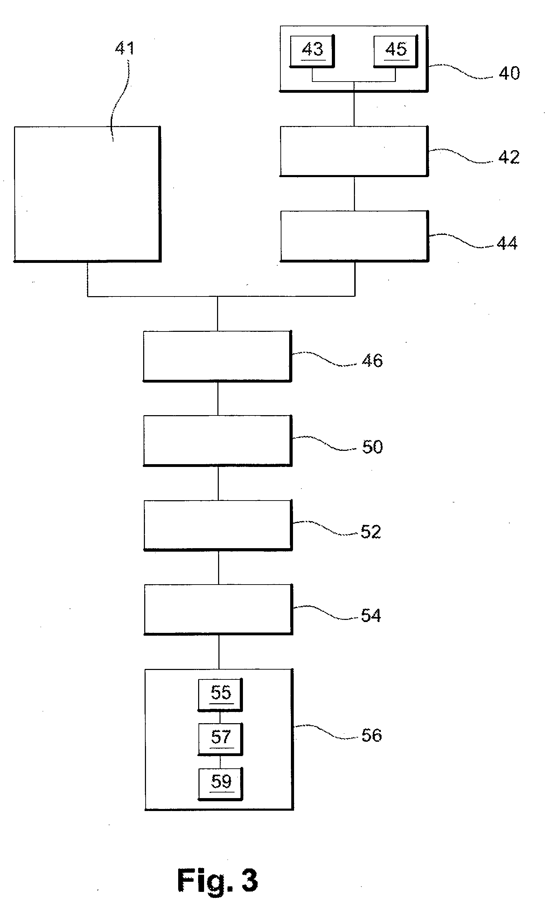

La figure 3 représente un schéma synoptique illustrant les principales étapes d'un procédé de réalisation 100 d'un renfort structurel métallique 30 de bord d'attaque d'aube 10 tel qu'illustré aux figures 1 et 2. La première étape 40 du procédé de réalisation 100 est une étape de découpage de tôles planes. La première étape 40 comporte une première sous-étape 43 de découpe d'une première tôle plane et une deuxième sous-étape 45 de découpe d'une deuxième tôle plane.

Les tôles planes sont découpées par un procédé de découpage connu de l'homme du métier permettant de découper des tôles de faible épaisseur, c'est-à-dire de l'ordre de quelques millimètres. A titre d'exemple, le procédé de découpage peut être un procédé de découpage laser.

Les deux tôles découpées vont permettre de réaliser les deux flancs 35, 37 du renfort métallique 30.

La deuxième étape 42 du procédé de réalisation 100 est une étape de mise en forme des flancs 35, 37 découpés. La conformation est réalisée par une mise en contrainte par compression de la face extrados de chaque flanc 35, 37. Cette première mise en forme est non permanente et permet de donner un certain galbe à chaque flanc, notamment la forme d'un intrados et d'un extrados. Le galbe des flancs permet d'aider le positionnement des flancs 35, 37 lors de l'étape suivante de positionnement. A titre d'exemple, cette mise en compression peut être réalisée par un procédé de galetage ou de martelage. Cette étape peut également comporter une opération permettant d'augmenter la rugosité des faces intérieures des flancs 35, 37 afin de faciliter l'accroche du renfort 30 sur l'aube 10 mais aussi afin d'augmenter l'adhérence des flancs 35, 37 dans l'outillage spécifique de maintien lors de l'étape suivante de positionnement.

La troisième étape 44 du procédé de réalisation 100 est une étape de positionnement, ou d'accostage, des deux flancs 35, 37 découpés. Les deux flancs 35, 37 sont positionnés dans un outillage spécifique de maintien 60 de façon à ce que les deux flancs 35, 37 aient une zone commune en contact ou à ce que les deux flancs 35, 37 soient séparés d'une distance définie par l'outillage, les deux flancs 35, 37 formant une préforme 26 du renfort métallique 30.

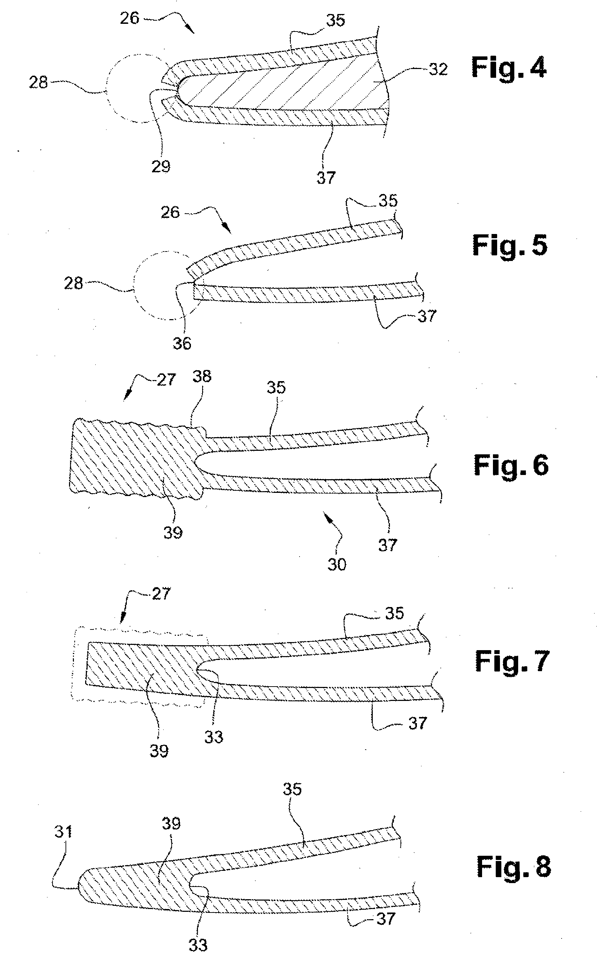

Les figures 4 et 5 représentent respectivement deux modes de réalisation de cette troisième étape 44 du procédé de réalisation.

La figure 4 représente plus particulièrement un premier mode de réalisation dans lequel les deux flancs 35, 37 sont accolés et présentent une zone 36 de contact commune.

Dans ce mode de réalisation et de façon préférentielle, les flancs 35 et 37 présentent, à leur extrémité proche de la zone 36 de contact, une courbure obtènue lors de la deuxième étape 42 de formage permettant de simplifier la mise en contact des flancs 35, 37.

La figure 5 représente plus particulièrement un deuxième mode de réalisation dans lequel les deux extrémités des flancs 35, 37 sont séparés par une distance définie, la distance séparant les deux flancs 35, 37 étant déterminée par l'outillage et notamment par l'épaisseur et le profil 29 d'un poignard interne 32 positionné entre les deux flancs 35, 37. De façon préférentielle, la distance séparant les deux extrémités des flancs 35, 37 est inférieur à dix millimètres.

Dans ce mode de réalisation et de façon préférentielle, les flancs 35 et 37 présentent, à leur extrémité, une courbure obtenue lors de la deuxième étape 42 de formage apte à épouser le profil 29 du poignard 32.

Dans les deux modes de réalisation, l'outillage permet de maintenir la position des deux flancs 35, 37 lors de l'étape suivante d'assemblage.

La forme de l'outillage est réalisée de façon à former le galbe et le profil intrados et extrados désirés du renfort métallique 30.

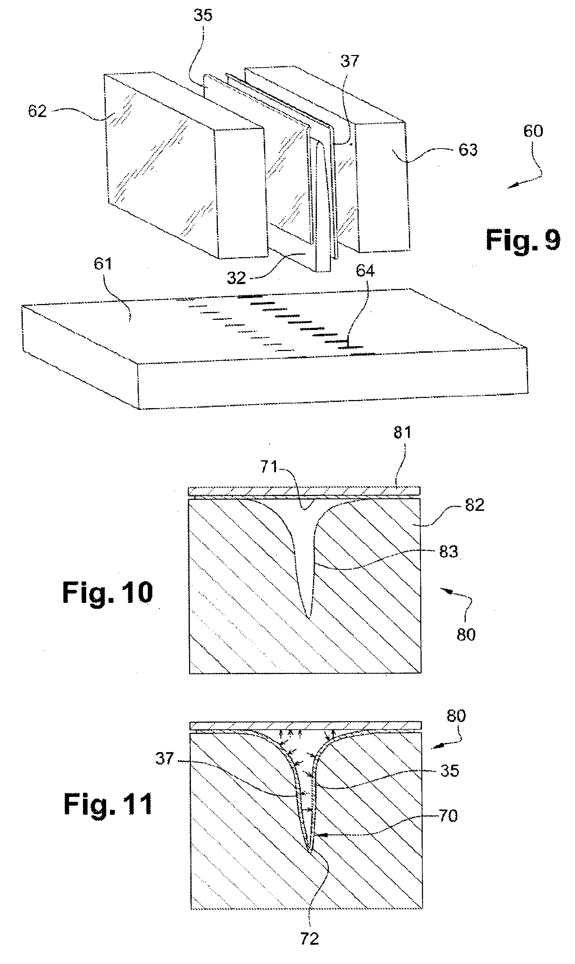

La figure 9 illustre une vue éclatée de l'outillage spécifique de maintien 60 utilisé pour la réalisation du renfort métallique de bord d'attaque selon le procédé de réalisation illustré en figure 3.

L'outillage spécifique de forme 60 comporte :
- un socle 61,
- un premier montant latéral gauche 62 solidarisé au socle 61 par des moyens de vissage (non représentés) ;
- un deuxième montant latéral droit 63 solidarisé au socle 61 par des moyens de vissage (non représenté), le socle 61 comportant des trous oblongs 64 de façon à modifier la position du montant latéral droit 63 par coulissement selon une direction parallèle au socle 61, lorsque les moyens de vissage ne sont pas bridés,
- et éventuellement un poignard interne 32.

Lors de la troisième étape 44 de positionnement, les deux flancs 35, 37 sont positionnés dans l'outillage spécifique de maintien 60 de façon à ce que les deux flancs 35, 37 aient une zone commune en contact ou à ce que les deux flancs 35, 37 soient séparés d'une distance définie par l'outillage 60. Le montant latéral droit 63 est positionné par coulissement de façon à enserrer l'ensemble formé par les flancs 35, 37 et éventuellement le poignard 32. Une fois en position, le montant latéral droit 63 est bridé en position par les moyens de vissage.

La quatrième étape 46 du procédé de réalisation 100 est une étape de construction de la base 39 du renfort 30 par un rechargement massif de matière (ou de métal d'apport), au moyen d'un procédé de soudage par arc du type MIG (pour « Metal Inert Gaz ») à courant pulsé et à débit de fil d'apport pulsé. Le soudage est réalisé en extrémité des deux flancs 35, 37, notamment au niveau de la zone de jointure des deux flancs 35, 37 référencée 28 sur les figures 4 et 5 formant une préforme 26 apte à recevoir du métal d'apport.

Le procédé de soudage MIG permet de construire des parties de pièces grâce à un taux de dépôt important sous la forme de cordons de sections importantes. La longueur et la largeur des cordons du rechargement étant définies par l'opérateur en fonction du débit du fil.

L'étape de construction de la base 39 permet de solidariser les flancs 35, 37 en position sur l'outillage 60.

Le rechargement de matière est réalisé par superposition de cordons de matière métallique 38 (ou de métal d'apport), de sections importantes, sur la préforme 26 et plus précisément à la jonction des deux flancs 35, 37 dans la zone référencée 28. Le nombre de passes, c'est-à-dire le nombre de cordons de matière 38 à appliquer, est déterminé en fonction de la hauteur de matière désirée ainsi que de la largeur des cordons définis.

Cette quatrième étape 46 du procédé de réalisation 100 est représentée particulièrement à la figure 6. En effet, la figure 6 illustre un vue en coupe du renfort structurel 30 en cours de réalisation après l'étape de rechargement de matière en extrémité des deux flancs 15, 17.

Selon le premier mode de réalisation dans lequel les flancs 35 et 37 sont accolés dans l'outillage 60, le profil interne 33 de la base 39 est approximé en biseau par l'accostage des deux flancs 35, 37 préalablement mis en forme lors de la deuxième étape 42.

Selon le deuxième mode de réalisation dans lequel les flancs 35, 37 sont espacés par le poignard 32 de l'outillage 60, le profil interne 33 de la base 39 est surmoulé sur le poignard 32. Le métal apporté par le rechargement assure la jonction entre les extrémités des deux flancs 35, 37 et génère le profil interne 33 de la base 39 du renfort 30.

L'outillage spécifique 60 permet le maintien en position des flancs 35, 37 lors du rechargement de matière par un emprisonnement des flancs 35, 37.

L'outillage 60 est suffisamment épais pour permettre la dissipation de l'énergie apportée par le procédé MIG de façon à ce que les flancs 35, 37 ne fondent pas et ne se déforment pas lors de l'étape d'assemblage et/ou de rechargement de matière. A cet effet, l'outillage 60 est réalisé préférentiellement en cuivre ou dans un alliage à base de cuivre et d'aluminium.

Dans le second mode de réalisation, la dissipation de la chaleur est réalisée également par le poignard 32 central de l'outillage 60, réalisé préférentiellement en cuivre ou dans un alliage à base de cuivre et d'aluminium

Le poignard 32 comporte un profil externe 29 apte à préformer la partie interne de chaque flanc 35, 37 du renfort 30 et notamment le profil interne rayonnant 33.

La cinquième étape 50 du procédé de réalisation 100 est une étape d'usinage de la zone rechargée. Cette étape 50 est illustrée à la figure 7.

Cette étape permet d'usiner la partie massive 27 de matière rechargée de façon à lui donner une forme approchée du profil final de la base 39 comprenant le bord d'attaque 31.

La sixième étape 52 du procédé de réalisation 100 est une étape de traitement thermique de détensionnement, ou de relaxation, de l'ensemble permettant de relaxer les contraintes résiduelles. Cette étape de traitement thermique est réalisée préférentiellement dans le même outillage spécifique de maintien 60 qui est mis dans un four à la température de forgeage du matériau utilisé.

La septième étape 54 du procédé de réalisation 100 est une étape de conformation à chaud réalisée préférentiellement dans le même outillage spécifique de maintien 60. Cette étape de conformation à chaud permet de donner la forme finale désirée au renfort 30.

Selon un mode préférentiel de l'invention, la sixième étape 52 et la septième étape 54 sont réalisées en même temps.

On rappel que la forme de l'outillage 60, et particulièrement le profil du poignard 32 et le profil du montant latéral droit 63 et du montant latéral gauche 62 sont directement liés à la forme finale et au galbe du renfort métallique 30 désiré.

Selon un autre mode de réalisation, la sixième étape 52 et la septième étape 54 sont réalisées au moyen d'un outillage spécifique de détensionnement et de conformation apte à supporter une montée en température. Dans ce cas, le procédé de réalisation selon l'invention comporte une étape intermédiaire consistant à débrider l'ensemble formé par les flancs 35, 37 et la zone rechargée 27 de l'outillage spécifique de maintien 60 afin d'être de nouveau bridé sur l'outillage spécifique de détensionnement et de conformation.

La huitième étape 56 du procédé de réalisation 100 est une étape de finition et de reprise du renfort 30 par usinage. Cette étape 56 de reprise comporte :
- une première sous-étape 55 de reprise du profil de la base 39 du renfort 30 de façon à l'affiner et notamment du profil aérodynamique du bord d'attaque 31 ;
- une deuxième sous-étape 57 de reprise des flancs 35, 37 ; cette étape consistant notamment au détourage des flancs 35, 37 et à l'amincissement des flancs intrados et extrados ;
- une troisième sous-étape 59 de finition permettant d'obtenir l'état de surface requis.

La figure 8 illustre le renfort 30 dans son état final obtenu par le procédé de réalisation selon l'invention.

En association avec ces principales étapes de réalisation, le procédé selon l'invention peut également comporter des étapes de contrôle non destructif du renfort 30 permettant de s'assurer de la conformité géométrique et métallurgique de l'ensemble obtenu. A titre d'exemple les contrôles non destructifs peuvent être réalisés par un procédé par rayon X.

Selon un deuxième mode de réalisation ne faisant pas partie des revendications, la première étape 40 de découpe de deux flancs, la deuxième étape 42 de mise en forme des deux flancs et la troisième étape de positionnement 44 des flancs découpés peuvent être remplacées par une étape 41 de formage à chaud d'une préforme 70 dans un outillage de forme 80.

Cette étape 41 de formage à chaud est illustrée aux figures 10 et 11. Dans cette étape, la préforme 70 est formée à partir d'une tôle 71 plane placée dans l'outillage de forme 80 qui est fermé de façon étanche. L'outillage 80 comporte une partie inférieure 82 comportant une empreinte 83 correspondant à la forme désirée de la préforme 70 et une partie supérieure 81 recouvrant la partie inférieure 82. Dans son état initial, la tôle 71 plane est maintenue bridée à ses extrémités entre les deux parties 81, 82 de l'outillage 80. L'étape de formage à chaud consiste à utiliser la propriété des métaux qui ont une capacité à se déformer sans rupture à une température donnée, comme par exemple l'aluminium ou encore le titane. A titre d'exemple, le titane dans certaines conditions de température, par exemple à 940°C, possède un taux d'allongement supérieur à 35%.

A titre d'exemple, un procédé de formage à chaud utilisé pour cette étape peut être un procédé de formage superplastique (SPF pour Super Plastic Forming en langue anglaise).

Le formage superplastique est un procédé permettant de produire des pièces complexes en tôles avec de faibles épaisseurs et en une seule opération.

Pour la mise en oeuvre de ce procédé, la tôle 71 est chauffée à une température donnée, par exemple à une température équivalente à la moitié de la température de fusion du matériau. A cette température, la tôle 71 est déformée par la pression d'un gaz neutre, par exemple de l'argon, introduit à l'intérieur de l'outillage 80 fermé. L'évolution de cette pression de gaz, représentée par des flèches sur la figure 11 est contrôlée de sorte que la mise en forme de la tôle 71 s'effectue dans le domaine superplastique qui est associé à une plage de vitesse de déformation spécifique à chaque famille de matériau. De façon connue, la prédiction de la loi d'évolution de la pression de formage est réalisée par simulation numérique de façon à optimiser la mise en forme et le temps de cycle d'un tel procédé.

Lorsque la préforme 70 est formée, elle comporte de façon similaire au mode de réalisation précédent, des flancs 35, 37 reliés entre eux par une extrémité 72 apte à recevoir du métal d'apport. La préforme 70 est ensuite démoulée de l'outillage 80 de façon à subir une opération permettant d'augmenter la rugosité des faces intérieures des flancs 35, 37 en vue d'augmenter l'adhérence de la préforme 70 dans l'outillage 60 lors de l'étape de rechargement de matière et de faciliter l'accrochage du renfort 30 sur l'aube 10.

Après démoulage et augmentation de la rugosité des faces intérieures des flancs 35, 37, la quatrième étape 46 de construction de la base 39 du renfort 30 permet un rechargement massif de matière (ou de métal d'apport), au moyen d'un procédé de soudage par arc du type MIG (pour « Metal Inert Gaz ») à courant pulsé et à débit de fil d'apport puisé.

Le rechargement de matière est réalisé au niveau de l'extrémité 72 de le préforme 70.

Tel que décrit précédemment, le procédé de soudage MIG permet de construire des parties de pièces grâce à un taux de dépôt important sous la forme de cordons de sections importantes. La longueur et la largeur des cordons du rechargement étant définies par l'opérateur en fonction du débit du fil.

Le procédé selon l'invention a été décrit principalement pour un renfort structurel métallique à base titane ; toutefois, le procédé selon l'invention est également applicable avec des matériaux à base nickel ou encore à base acier.

L'utilisation d'un procédé de soudage de type MIG permet d'obtenir par un procédé de soudage des caractéristiques structurelles et mécaniques d'un matériau obtenu par coulage ou forgeage. En effet, la liaison soudée obtenue par le procédé MIG comporte les mêmes caractéristiques mécaniques que le matériau corroyé.

L'invention a été particulièrement décrite avec un procédé de soudage de type MIG, toutefois, le procédé de soudage MIG peut être remplacé par autre type de procédé par rechargement de matière tel qu'un procédé de rechargement par poudre (de type Laser Cladding en langue anglaise), permettant d'obtenir des caractéristiques proches d'un matériau corroyé.

L'invention a été particulièrement décrite pour la réalisation d'un renfort métallique d'une aube composite de turbomachine ; toutefois, l'invention est également applicable pour la réalisation d'un renfort métallique d'une aube métallique de turbomachine.

L'invention a été particulièrement décrite pour la réalisation d'un renfort métallique d'un bord d'attaque d'aube de turbomachine ; toutefois, l'invention est également applicable pour la réalisation d'un renfort métallique d'un bord de fuite d'une aube de turbomachine.

Les autres avantages de l'invention sont notamment les suivants :
- réduction des coûts de réalisation ;
- réduction du temps de réalisation ;
- simplification de la gamme de fabrication ;
- réduction des coûts matière.

## Revendications

1. Procédé de réalisation d'un renfort métallique (30) de bord d'attaque ou de bord de fuite d'aube de turbomachine présentant une base, formant le bord d'attaque ou le bord de fuite dudit renfort, prolongée par deux flancs latéraux, ledit procédé comportant une étape (44) de positionnement d'une préforme (26, 70), formée par une première tôle métallique (35) et par une deuxième tôle métallique (37), au moyen d'un outillage (60) positionnant ladite préforme (26, 70) dans une position de sorte que ladite préforme (26, 70) présente à une extrémité une zone (28, 72) apte à recevoir du métal d'apport,
ledit procédé étant **caractérisé en ce qu'**il comporte en outre une étape (46) de construction d'une base (39) dudit renfort métallique (30) par rechargement de métal d'apport dans ladite zone (28, 72), par superposition d'une pluralité de cordons de métal, au moyen d'un appareillage de soudage MIG comportant un générateur de courant pulsé et présentant un débit de fil d'apport pulsé.

2. Procédé de réalisation d'un renfort métallique (30) d'aube de turbomachine selon la revendication précédente **caractérisé en ce que** ladite préforme (26) comporte une première tôle métallique (35) et une deuxième tôle métallique (37) positionnées, au moyen dudit outillage (60), dans une position non parallèle de sorte qu'elles présentent à leur extrémité une zone (28) apte à recevoir ledit métal d'apport, ladite étape de construction de ladite base (39) dudit renfort (30) solidarisant lesdites tôles métalliques (35, 37) en position.

3. Procédé de réalisation d'un renfort métallique (30) d'aube de turbomachine selon la revendication 1 **caractérisé en ce que** ladite préforme (70) est formée par une tôle métallique (71) préformée à chaud de sorte que ladite préforme (70) comporte des flancs (35, 37) et à une extrémité une zone (72) apte à recevoir ledit métal d'apport.

4. Procédé de réalisation d'un renfort métallique (30) d'aube de turbomachine selon l'une des revendications 1 à 3 **caractérisé en ce que** ladite étape (46) de construction est suivie d'une étape (50) d'usinage de ladite matière rechargée (27) dans ladite zone d'extrémité (28) de soudage de façon à approcher le profil final de ladite base (39).

5. Procédé de réalisation d'un renfort métallique (30) d'aube de turbomachine selon la revendication 4 **caractérisé en ce qu'**il comporte une étape (52) de traitement thermique de relaxation des contraintes.

6. Procédé de réalisation d'un renfort métallique (30) d'aube de turbomachine selon l'une des revendications 4 à 5 **caractérisé en ce qu'**il comporte une étape (54) de conformation à chaud.

7. Procédé de réalisation d'un renfort métallique (30) d'aube de turbomachine selon l'une des revendications 5 à 6 **caractérisé en ce qu'**il comporte une étape (56) de finition dudit renfort métallique (30) consistant en la reprise de ladite matière rechargée (27) de façon à affiner le profil final de ladite base (39) et le bord d'attaque (31) ou le bord de fuite dudit renfort métallique (30) et/ou en la reprise des tôles métalliques (35, 37) de façon à former les flancs dudit renfort métallique (30).

8. Procédé de réalisation d'un renfort métallique (30) d'aube de turbomachine selon l'une des revendications 1 à 7 **caractérisé en ce qu'**il comporte une étape (40) de découpage de ladite première tôle métallique (35) et de ladite deuxième tôle métallique (37) par découpage laser.

9. Procédé de réalisation d'un renfort métallique (30) d'aube de turbomachine selon l'une des revendications 1 à 8 **caractérisé en ce qu'**il comporte une opération consistant à augmenter la rugosité des faces intérieures desdits flancs (35, 37).

10. Procédé de réalisation d'un renfort métallique (30) d'aube de turbomachine selon l'une des revendications 1 à 9 **caractérisé en ce qu'**il comporte une étape (42) de mise en forme desdites tôles métalliques (35, 37) avant ladite étape de positionnement dans ledit outillage (60).

11. Procédé de réalisation d'un renfort métallique (30) d'aube de turbomachine selon l'une des revendications 1 à 10 **caractérisé en ce que**, lors de ladite étape (44) de positionnement, lesdites tôles métalliques (35, 37) sont mises en forme dans ledit outillage (60) et sont maintenues accolées.

12. Procédé de réalisation d'un renfort métallique (30) d'aube de turbomachine selon l'une des revendications 1 à 11 **caractérisé en ce que**, lors de ladite étape (44) de positionnement, lesdites tôles métalliques (35, 37) sont mises en forme et sont maintenues espacées par un poignard (32) positionné entre lesdits tôles métalliques (35, 37), le profil externe dudit poignard (32) conformant le profil de l'intrados et de l'extrados desdites tôles métallique (35, 37).

13. Procédé de réalisation d'un renfort métallique (30) d'aube de turbomachine selon l'une des revendications 1 à 12 **caractérisé en ce qu'**il comporte une étape d'évacuation de la chaleur desdites tôles métalliques (35, 37) en position dans ledit outillage via ledit outillage (60).

## Patentansprüche

1. Realisierungsverfahren einer Metallverstärkung (30) einer Anlegekante oder Austrittskante der Schaufel einer Turbomaschine, die eine Basis aufweist, welche die Anlegekante oder die Austrittskante der genannten Verstärkung bildet und durch zwei laterale Kanten verlängert ist, wobei das genannte Verfahren eine Positionierungsstufe (44) einer Vorform (26, 70) umfasst, die durch ein erstes Metallblech (35) und durch ein zweites Metallblech (37) geformt ist, mittels eines Werkzeugs (60) die genannte Vorform (26, 70) in einer Position derart positioniert, dass die genannte Vorform (26, 70) an einem Ende einen Bereich (28, 72) aufweist, der geeignet ist, Lötmetall aufzunehmen,
wobei das genannte Verfahren **dadurch gekennzeichnet ist, dass** es darüber hinaus eine Aufbaustufe (46) einer Basis (39) der genannten Metallverstärkung (30) per Nachladen von Lötmetall in dem genannten Bereich (28, 72), per Überlagerung einer Vielzahl von Metallwülsten mittels eines MIG-Schweißgeräts umfasst, das einen gepulsten Stromgenerator umfasst und einen gepulsten Lötdrahtdurchsatz aufweist.

2. Realisierungsverfahren einer Metallverstärkung (30) einer Anlegekante der Schaufel einer Turbomaschine gemäß dem voranstehenden Anspruch, **dadurch gekennzeichnet, dass** die genannte Vorform (26) ein erstes Metallblech (35) und ein zweites Metallblech (37) umfasst, die mittels des genannten Werkzeugs (60) in einer nicht parallelen Position derart positioniert sind, dass sie an ihrem Ende einen Bereich (28) aufweisen, der geeignet ist, das genannte Lötmetall aufzunehmen, wobei die genannte Aufbaustufe der genannten Basis (39) der genannten Verstärkung (30) die genannten Metallbleche (35, 37) fest in der Position befestigen.

3. Realisierungsverfahren einer Metallverstärkung (30) der Schaufel einer Anlegekante einer Turbomaschine gemäß Anspruch 1, **dadurch gekennzeichnet, dass** die genannte Vorform (70) durch ein Metallblech (71) geformt ist, das heiß derart vorgeformt ist, dass die genannte Vorform (70) Flanken (35, 37) und an einem Ende einen Bereich (72) umfasst, der geeignet ist, das genannte Lötmetall aufzunehmen.

4. Realisierungsverfahren einer Metallverstärkung (30) der Schaufel einer Anlegekante einer Turbomaschine gemäß Anspruch 1 bis 3, **dadurch gekennzeichnet, dass** auf die genannte Aufbaustufe (46) eine Bearbeitungsstufe (50) des genannten nachgeladenen Materials (27) in dem genannten Endbereich (28) der Verschweißung derart folgt, dass das Endprofil der genannten Basis (39) sich ihm annähert.

5. Realisierungsverfahren einer Metallverstärkung (30) der Schaufel einer Anlegekante einer Turbomaschine gemäß Anspruch 4, **dadurch gekennzeichnet, dass** es eine thermische Bearbeitungsstufe (52) zur Entlastung von Spannungen umfasst.

6. Realisierungsverfahren einer Metallverstärkung (30) der Schaufel einer Anlegekante einer Turbomaschine gemäß Anspruch 4 bis 5, **dadurch gekennzeichnet, dass** es eine Heiß-Anpassungsstufe (54) umfasst.

7. Realisierungsverfahren einer Metallverstärkung (30) der Schaufel einer Anlegekante einer Turbomaschine gemäß Anspruch 5 bis 6, **dadurch gekennzeichnet, dass** es eine Endbearbeitungsstufe (56) der genannten Metallverstärkung (30) umfasst, die in der Nachbearbeitung des genannten nachgeladenen Materials (27) derart besteht, dass das Endprofil der genannten Basis (39) und die Anlegekante (31) oder die Austrittskarten der genannten Metallverstärkung (30) verfeinert wird und / oder in der Nachbearbeitung der Metallbleche (35, 37) derart, dass die Flanken der genannten Metallverstärkung (30) geformt werden.

8. Realisierungsverfahren einer Metallverstärkung (30) der Schaufel einer Anlegekante einer Turbomaschine gemäß Anspruch 1 bis 7, **dadurch gekennzeichnet, dass** es eine Zuschneidstufe (40) des genannten ersten Metallblechs (35) und des genannten zweiten Metallblechs (37) per Laserzuschneiden umfasst.

9. Realisierungsverfahren einer Metallverstärkung (30) der Schaufel einer Anlegekante einer Turbomaschine gemäß Anspruch 1 bis 8, **dadurch gekennzeichnet, dass** es eine Operation umfasst, die in der Erhöhung der Rauheit der Innenseiten der genannten Flanken (35, 37) besteht.

10. Realisierungsverfahren einer Metallverstärkung (30) der Schaufel einer Anlegekante einer Turbomaschine gemäß Anspruch 1 bis 9, **dadurch gekennzeichnet, dass** es eine Formgebungsstufe (42) der genannten Metallbleche (35, 37) vor der genannten Positionierungsstufe in dem genannten Werkzeug (60) umfasst.

11. Realisierungsverfahren einer Metallverstärkung (30) der Schaufel einer Anlegekante einer Turbomaschine gemäß Anspruch 1 bis 10, **dadurch gekennzeichnet, dass** die genannten Metallbleche (35 37) in der genannten Positionierungsstufe (44) in dem genannten Werkzeug (60) in Form gebracht werden und angefügt festgehalten werden.

12. Realisierungsverfahren einer Metallverstärkung (30) der Schaufel einer Anlegekante einer Turbomaschine gemäß Anspruch 1 bis 11, **dadurch gekennzeichnet, dass** die genannten Metallbleche (35, 37) in der genannten Positionierungsstufe (44) in Form gebracht werden und durch einen Dolch (32) beabstandet gehalten werden, der zwischen den genannten Metallblechen (35, 37) positioniert ist, wobei das externe Profil des genannten Dolches (32) das Profil der Unterseite und der Oberseite der genannten Metallbleche (35, 37) anpasst.

13. Realisierungsverfahren einer Metallverstärkung (30) der Schaufel einer Anlegekante einer Turbomaschine gemäß Anspruch 1 bis 12, **dadurch gekennzeichnet, dass** es eine Austragsstufe der Hitze der genannten Metallbleche (35, 37) umfasst, die sich in dem genannten Werkzeug über das genannte Werkzeug (60) in Position befinden.

## Claims

1. A method for making a metal reinforcement (30) of a leading edge or a trailing edge of a turbine engine blade having a base, forming the leading edge or the trailing edge of said reinforcement, which base is extended by two side flanks, said method including a step (44) of positioning a preform (26, 70), formed by a first sheet metal (35) and a second sheet metal (37), by means of a tooling (60) positioning said preform (26, 70) into a position such that said preform (26, 70) has at one end a zone (28, 72) able to receive filler metal,
said method being **characterised in that** it further includes a step (46) of building a base (39) of said metal reinforcement (30) by refilling a filler metal in said zone (28, 72), by superimposing a plurality of metal beads, by means of a MIG welding apparatus including a pulsed current generator and having a pulsed filler wirer flowrate.

2. The method for making a metal reinforcement (30) of a turbine engine blade according to the preceding claim, **characterised in that** said preform (26) includes a first sheet metal (35) and a second sheet metal (37) which are positioned, by means of said tooling (60), in a non-parallel position such that they have at their end a zone (28) able to receive said filler metal, said step of building said base (39) of said reinforcement (30) securing together said sheet metals (35, 37) in position.

3. The method for making a metal reinforcement (30) of a turbine engine blade according to claim 1, **characterised in that** said preform (70) is formed by a hot-preformed sheet metal (71) such that said preform (70) includes flanks (35, 37) and at one end, a zone (72) able to receive said filler metal.

4. The method for making a metal reinforcement (30) of a turbine engine blade according to one of claims 1 to 3, **characterised in that** said building step (46) is followed by a step (50) of machining said refilled material (27) in said welding end zone (28) so as to approximate the final profile of said base (39).

5. The method for making a metal reinforcement (30) of a turbine engine blade according to claim 4, **characterised in that** it includes a step (52) of stress relieving heat treatment.

6. The method for making a metal reinforcement (30) of a turbine engine blade according to one of claims 4 to 5, **characterised in that** it includes a hot shaping step (54).

7. The method for making a metal reinforcement (30) of a turbine engine blade according to one of claims 5 to 6, **characterised in that** it includes a step (56) of finishing said metal reinforcement (30) consisting in lapping said refilled material (27) so as to refine the final profile of said base (39) and the leading edge (31) or the trailing edge of said metal reinforcement (30) and/or in lapping the sheet metals (35, 37) so as to form the flanks of said metal reinforcement (30).

8. The method for making a metal reinforcement (30) of a turbine engine blade according to one of claims 1 to 7, **characterised in that** it includes a step (40) of cutting said first sheet metal (35) and said second sheet metal (37) by laser cutting.

9. The method for making a metal reinforcement (30) of a turbine engine blade according to one of claims 1 to 8, **characterised in that** it includes an operation consisting in increasing the roughness of the internal faces of said flanks (35, 37).

10. The method for making a metal reinforcement (30) of a turbine engine blade according to one of claims 1 to 9, **characterised in that** it includes a step (42) of shaping said sheet metals (35, 37) before said step of positioning into said tooling (60).

11. The method for making a metal reinforcement (30) of a turbine engine blade according to one of claims 1 to 10, **characterised in that**, during said positioning step (44), said sheet metals (35, 37) are shaped in said tooling (60) and are held adjoining each other.

12. The method for making a metal reinforcement (30) of a turbine engine blade according to one of claims 1 to 11, **characterised in that**, during said positioning step (44), said sheet metals (35, 37) are shaped and are held spaced apart by a draw piece (32) positioned between said sheet metals (35, 37), the outer profile of said draw piece (32) shaping the profile of the lower surface and the upper surface of said sheet metals (35, 37).

13. The method for making a metal reinforcement (30) of a turbine engine blade according to one of claims 1 to 12, **characterised in that** it includes a step of evacuating heat from said sheet metals (35, 37) in position in said tooling via said tooling (60).
